# EUROPÄISCHE PATENTSCHRIFT

(11) **EP 3 216 240 B1**
(45) Veröffentlichungstag und Bekanntmachung des Hinweises auf die Patenterteilung: **30.12.2020**
(21) Anmeldenummer: 15801357.3
(22) Anmeldetag: 17.11.2015
(51) Int. Cl.: H04W 4/02, H04L 29/06

(54) **SYSTEM ZUR EINHALTUNG VON ZEITLICHEN ZUGRIFFSBESCHRÄNKUNGEN IN EINER CLOUD-UMGEBUNG**
SYSTEM FOR MAINTAINING TIME-BASED ACCESS RESTRICTIONS IN A CLOUD ENVIRONMENT
SYSTÈME DE RESPECT DES RESTRICTIONS D'ACCÈS DANS LE TEMPS DANS UN ENVIRONNEMENT EN NUAGE

(30) Priorität: 07.01.2015 DE 102015200061
(43) Veröffentlichungstag der Anmeldung: 13.09.2017
(73) Patentinhaber: Siemens Aktiengesellschaft, 80333 München (DE)
(72) Erfinder: MITTERMEIER, Ludwig Andreas, 81541 München (DE)
(86) Internationale Anmeldenummer: PCT/EP2015/076773
(87) Internationale Veröffentlichungsnummer: WO 2016/110354

(56) Entgegenhaltungen:
- CN-A- 103 561 021
- US-A1- 2014 330 945

## Beschreibung

Die Erfindung betrifft ein System zur Einhaltung von zeitlichen Zugriffsbeschränkungen in einer Cloud-Umgebung

Cloud Computing Umgebungen können gut dazu verwendet werden, digitale Inhalte, wie bspw. Bilder, Videos, Musik oder aber auch beispielweise technische Dokumente, für Benutzer oder Konsumenten zugänglich zu machen. Einige Cloud Plattformen bieten sogar die Möglichkeit, die digitalen Inhalte dynamisch, beispielsweise an die Netzwerkkapazität oder das verwendete Endgerät anzupassen.

Bisher müssen Anwender, die digitale Inhalte auf Basis einer Cloud Computing Umgebung verbreiten wollen, jedoch selbst dafür Sorge tragen, dass zeitliche Beschränkungen hinsichtlich des Zugriffs überprüft und eingehalten werden. Typischerweise geschieht dies mit eigener Applikationslogik, die zwischen dem Cloud-Speicher und den zugreifenden Konsumentengeräten platziert ist.

Das Dokument CN 103 561 021 A offenbart ein Cloud-Speichersystem mit einer Speichervorrichtung, einem Zugriffsterminal und einem Gatekeeper-System.

Das Dokument US 2014/330945 A1 offenbart Benutzergerätprofile, die ein Benutzergerät nur benutzen kann, wenn es bestimmte Bedingungen erfüllt.

Die der Erfindung zu Grunde liegende **Aufgabe** besteht nun darin, ein System zur Einhaltung von zeitlichen Zugriffsbeschränkungen in einer Cloud-Umgebung anzugeben, bei dem anwenderseitig mit möglichst wenig Aufwand ein gut handhabbarer und sicherer Betrieb ermöglicht wird.

Diese Aufgabe wird durch die Merkmale des Patentanspruchs 1 erfindungsgemäß gelöst. Die weiteren Ansprüche betreffen bevorzugte Ausgestaltungen der Erfindung.

Die Erfindung betrifft im Wesentlichen ein System zur zeitlichen Zugriffsbeschränkung in einer Cloud-Umgebung, bei dem die Cloud-Umgebung selbst die zeitlichen Aspekte beim Zugriff auf digitale Inhalte überprüft und entsprechende Policies forciert bzw. eine eigene Gate-Keeper-Einheit aufweist, die in Abhängigkeit von Zugriffsregeln mit Zeitbedingungen und einer aktuellen Zeitangabe ein Herunterladen von Nutzdaten durch ein konsumentenseitiges Anwendungsprogramm ermöglicht bzw. verhindert. Hiermit kann eine bessere Optimierung bei der Replikation digitaler Inhalte in verschiedene Teile der Welt erfolgen und beispielsweise ein höheres Sicherheitsniveau erreicht werden. Somit kann beispielweise erreicht werden, dass die Cloud Computing Umgebung den Zugriff auf einen Film für ein bestimmtes Land erst zu einem definierten Zeitpunkt freigibt oder dass bestimmte Inhalte in einem bestimmten Land erst später am Abend und nicht schon tagsüber zugreifbar sind.

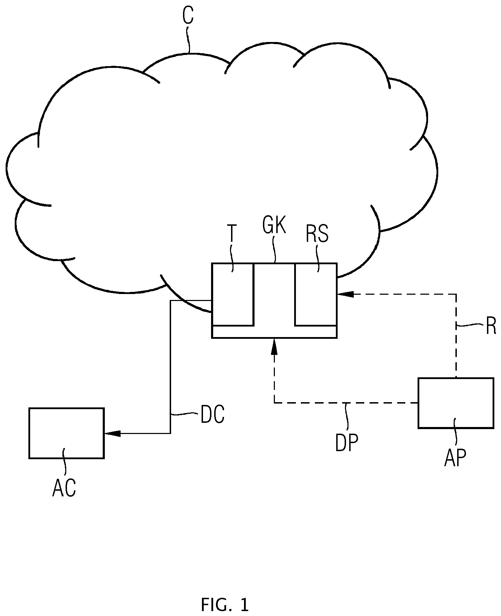

Nachfolgend wird die Erfindung anhand von in der Zeichnung dargestellten Ausführungsbeispielen näher erläutert.

Die Zeichnung zeigt einen Cloud-Speicher C mit einer eigenen einer Gatekeeper-Komponente GK, die hier ihrerseits einen Zugriffsregel-Speicher RS und einen Zeitgeber T aufweist, wobei der Zeitgeber eine ortunabhängige einheitliche Zeitbasis darstellt und bspw. die GMT als Zeitnormal verwendet. Ferner ist konsumentenseitig ein Anwendungsprogramm AC gezeigt, das angeforderte Daten DC aus dem Cloud-Speicher C herunterlädt. Durch eine Ortsfeststellung des konsumentenseitigen Anwendungsprogramms AC, z. B. mit Hilfe der IP-Adresse des Konsumenten, und die ortsunabhängige aktuelle Zeitangabe einer Zeitbasis T der Cloud-Umgebung wird die betreffende aktuelle Lokalzeit des konsumentenseitigen Anwendungsprogramms gebildet.

Schließlich ist - gestrichelt - ein optionales anbieterseitiges Anwendungsprogramm AP dargestellt, das anzubietende Daten DP in den Cloud-Speicher C hochlädt und der Gatekeeper-Komponente GK bzw. dem Zugriffsregel-Speicher RS für die anzubietenden Daten DP zugehörige Zugriffsregel-Informationen R zur Verfügung stellt.

Neben dem Anbieter kann optional auch die Cloud-Umgebung selbst solche Zugriffsregeln vorgeben.
Das anwenderseitige Anwenderprogramm AP kann neben den für die anzubietenden Daten aktuell hochgeladen Zugriffsregeln auch optional bereits im Regelspeicher vorhandene eigene oder optional auch fremde Regeln heranziehen bzw. auswählen und mit den anzubietenden Daten verknüpfen.

Um die anzubietenden Daten mit den darauf anzuwendenden Regeln zu verknüpfen, können optional bspw. Nummern oder Zeiger auf die jeweils anzuwendenden Regeln zusammen mit den Daten in der Cloud-Umgebung gespeichert werden.

Vorteilhafterweise sind der Zugriffsregel-Speicher RS und der Zeitgeber T im Bereich der Gatekeeper-Komponente GK realisiert und auf die Gatekeeper-Komponente GK bzw. auf bestimmte Teile davon ist ein Zugriff nur mit einer entsprechenden Berechtigung, bspw. des betreffenden Daten-Anbieters, möglich, um unerlaubte Manipulationen zu verhindern.

In der Gatekeeper-Komponente GK wird ein jeweiliger konsumentenseitiger Zugriff auf einen Cloud-Speicher C mit Hilfe der betreffenden Zugriffsregeln einer zeitlichen Überprüfung unterzogen und der Zugriff davon abhängig entweder gestattet oder verweigert.

In den Zugriffsregeln sind vorteilhafterweise als Parameter mindestens eine aktuelle Uhrzeit und ein aktuelles Datum auf Seite des Cloud-Speichers sowie mindestens eine gewünschte lokale Zugriffszeit und mindestens ein Ort bzw. eine Lokalität des Zugreifenden enthalten.

## Patentansprüche

1. System zur zeitlichen Zugriffsbeschränkung in einer Cloud-Umgebung (C), wobei
die Cloud-Umgebung selbst eine eigene Gate-Keeper-Einheit (GK) aufweist, die in Abhängigkeit von Zugriffsregeln (R) mit Zeitbedingungen und einer aktuellen Zeitangabe ein Herunterladen von Nutzdaten (DC) durch ein konsumentenseitiges Anwendungsprogramm (AC) ermöglicht bzw. verhindert;
die Zugriffsregeln als Parameter mindestens eine aktuelle Uhrzeit und ein aktuelles Datum auf Seite des Cloud-Speichers sowie mindestens eine gewünschte lokale Zugriffszeit und mindestens ein Ort bzw. eine Lokalität des Zugreifenden enthalten; und
die Gatekeeper-Einheit (GK) einen Zugriffsregel-Speicher (RS) und einen Zeitgeber (T) aufweist, wobei der Zeitgeber eine ortsunabhängige einheitliche Zeitbasis darstellt und mit Hilfe einer das konsumentenseitige Anwendungsprogramm (AC) betreffenden Ortsinformation eine betreffende Lokalzeit ermittelt wird.

2. System nach Anspruch 1,
bei dem zusätzlich auch die aktuelle Verweildauer eines betreffenden digitalen Inhalts im Cloud-Speicher und/oder die Zeitdauer seit dem letzten Zugriff einen betreffenden digitalen Inhalt, in den gespeicherten Zugriffsregeln (R) enthalten sind.

3. System nach Anspruch 1 oder 2,
bei dem der Zugriffsregel-Speicher (RS) und der Zeitgeber (T) im Bereich der Gatekeeper-Komponente (GK) realisiert sind und auf die Gatekeeper-Komponente (GK) bzw. auf bestimmte Teile davon ein Zugriff nur mit einer entsprechenden Berechtigung des betreffenden Daten-Anbieters ermöglicht wird.

4. System nach einem der vorhergehenden Ansprüche, bei dem ein anbieterseitiges Anwendungsprogramm (AP) anzubietende Daten (DP) in den Cloud-Speicher C hochlädt und der Gatekeeper-Komponente (GK) bzw. dem Zugriffsregel-Speicher (RS) für die anzubietenden Daten (DP) zugehörige Zugriffsregel-Informationen (R) zur Verfügung stellt.

5. System nach Anspruch 4,
bei dem das anwenderseitige Anwenderprogramm (AP) für hochgeladene Daten (DP) aktuell zugehörige Zugriffsregel-Informationen (R) in den Zugriffsregel-Speicher (RS) hochlädt und/oder bereits im Regelspeicher (RS) vorhandene eigene und/oder fremde Zugriffsregel-Informationen auswählt und mit den anzubietenden Daten verknüpft.

6. System nach einem der vorhergehenden Ansprüche,
bei dem die anzubietenden Daten (DP) mit den Zugriffsregel-Informationen (R) derart verknüpft werden, dass Nummern oder Zeiger auf die jeweils anzuwendenden Regeln zusammen mit den zugehörigen Daten in der Cloud-Umgebung gespeichert werden.

## Claims

1. System for temporal access restriction in a cloud environment (C), wherein
the cloud environment itself has a dedicated gatekeeper unit (GK) that allows or prevents downloading of payload data (DC) by a consumer-side application program (AC) on the basis of access rules (R) containing time conditions and a current date and time;
the access rules contain at least a current time and a current date on the side of the cloud memory and at least one desired local access time and at least one location or locality of the accessor as parameters; and
the gatekeeper unit (GK) has an access rule memory (RS) and a clock (T), wherein the clock constitutes a location-independent uniform time base, and a relevant local time is determined using location information relating to the consumer-side application program (AC).

2. System according to Claim 1,
in which the current retention time of a relevant item of digital content in the cloud memory and/or the time since the last access operation to a relevant item of digital content are additionally also contained in the stored access rules (R).

3. System according to Claim 1 or 2,
in which the access rule memory (RS) and the clock (T) are implemented in the region of the gatekeeper component (GK), and access to the gatekeeper component (GK) or to certain parts thereof is allowed only with corresponding authorization from the relevant data provider.

4. System according to one of the preceding claims, in which a provider-side application program (AP) uploads data (DP) to be provided to the cloud memory (C) and the gatekeeper component (GK) or the access rule memory (RS) makes available associated access rule information (R) for the data (DP) to be provided.

5. System according to Claim 4,
in which the application-side application program (AP) uploads currently associated access rule information (R) to the access rule memory (RS) for uploaded data (DP) and/or selects third-party and/or its own access rule information already present in the rule memory (RS) and links it to the data to be provided.

6. System according to one of the preceding claims,
in which the data (DP) to be provided are linked to the access rule information (R) such that numbers or pointers to the respective rules to be applied are stored in the cloud environment together with the associated data.

## Revendications

1. Système de restriction d'accès dans le temps dans un environnement en nuage (C),
l'environnement en nuage lui-même présentant une propre unité garde-grille (GK) qui permet resp. empêche, en fonction de règles d'accès (R) avec des conditions de temps et une indication de temps actuelle un téléchargement de données utiles (DC) par un programme d'application (AC) côté consommateur ;
les règles d'accès contenant, en tant que paramètres, au moins une heure actuelle et une date actuelle du côté de la mémoire en nuage ainsi qu'au moins une heure d'accès locale souhaitée et au moins un lieu resp. une localité de l'accédant et
l'unité garde-grille (GK) comportant une mémoire de règles d'accès (RS) et une horloge (T), l'horloge représentant une base de temps uniforme indépendante du lieu, et une heure locale pertinente étant déterminée à l'aide d'une information de lieu concernant le programme d'application (AC) côté consommateur.

2. Système selon la revendication 1, dans lequel sont aussi additionnellement contenues, dans les règles d'accès stockées (R), la durée de séjour actuelle d'un contenu numérique pertinent dans la mémoire en nuage et/ou la durée de temps écoulée depuis le dernier accès à un contenu numérique pertinent.

3. Système selon la revendication 1 ou 2, dans lequel la mémoire de règles d'accès (RS) et l'horloge (T) sont réalisées dans la zone du composant garde-grille (GK) et un accès au composant garde-grille (GK) resp. à certaines parties de celui-ci n'est rendu possible qu'avec une autorisation correspondante du fournisseur de données concerné.

4. Système selon l'une des revendications précédentes, dans lequel un programme d'application (AP) côté fournisseur charge dans la mémoire en nuage C des données à fournir (DP) et met à la disposition du composant garde-grille (GK) resp. de la mémoire de règles d'accès (RS) des informations de règles d'accès (R) associées pour les données à fournir (DP) .

5. Système selon la revendication 4, dans lequel le programme d'application (AP) côté utilisateur charge dans la mémoire de règles d'accès (RS) des informations de règles d'accès (R) actuellement associées pour des données chargées (DP) et/ou choisit des informations de règles d'accès propres et/ou étrangères déjà présentes dans la mémoire de règles (RS) et les associe aux données à fournir.

6. Système selon l'une des revendications précédentes, dans lequel les données à fournir (DP) sont associées de manière telle aux informations de règles d'accès (R) que des numéros ou des pointeurs indiquant les règles à appliquer respectivement sont sauvegardés ensemble avec les données associées dans l'environnement en nuage.
